# EUROPÄISCHE PATENTSCHRIFT

(11) **EP 2 270 391 B1**
(45) Veröffentlichungstag und Bekanntmachung des Hinweises auf die Patenterteilung: **09.05.2012**
(21) Anmeldenummer: 10405123.0
(22) Anmeldetag: 29.06.2010
(51) Int. Cl.: F21V 7/00, G02B 27/62, G03B 21/64

(54) **Installationsverfahren für Beleuchtungsvorrichtungen**
Installation method for lighting devices
Procédé d'installation pour dispositifs d'éclairage

(30) Priorität: 29.06.2009 CH 10002009
(43) Veröffentlichungstag der Anmeldung: 05.01.2011
(73) Patentinhaber: Huber und Steiger GmbH, 8032 Zürich (CH)
(72) Erfinder: Huber, Luzius, 8126 Zumikon (CH)
(74) Vertreter: Frei Patent Attorneys

(56) Entgegenhaltungen:
- FR-A1- 2 755 211
- US-A- 4 217 047

## Beschreibung

Die Erfindung betrifft die Beleuchtung von Gebäuden oder anderen Objekten, darunter auch zu beleuchtenden Flächen von beispielsweise Parkanlagen.

In Städten oder an Orten von allgemeinen Interesse werden abends oder des Nachts oft Gebäude oder andere Objekte wie Brücken, Mauern etc. beleuchtet. Traditionell werden dafür einige Flutlichtscheinwerfer in einer gewissen Entfernung vom zu beleuchtenden Objekt angebracht und auf das Objekt gerichtet. Bei der Beleuchtung wird ein grosser Teil des Lichtes seitlich an den Gebäuden vorbei und nach oben gestrahlt. Aus dem Stand der Technik sind weiterhin Beleuchtungskonzepte bekannt, bei denen eine Mehrzahl von Leuchtquellen direkt auf der Fassade eines Gebäudes angebracht werden. Wenn diese nach unten gerichtet wären, hätten sie den Nachteil, dass sie den am Boden stehenden Betrachter blenden würden. Daher sind sie himmelwärts gerichtet, und viel Streulicht wird am Gebäude vorbei nach oben abgestrahlt. Sowohl Beleuchtungsanlagen mit entfernt stehenden Scheinwerfern als auch solche mit am Gebäude angebrachten Lichtquellen tragen folglich wesentlich zur Lichtverschmutzung des Nachthimmels in dicht besiedelten Gebieten bei.

Eine Weiterentwicklung der Flutbeleuchtung ist die präzise Bestrahlung eines Gebäudes, welche kein störendes Licht in die Umgebung und Richtung Himmel strahlt. EP 1'744'097 beschreibt eine solche Beleuchtungsvorrichtung, welche Licht von einer Punktlichtquelle durch eine Sammeloptik auf eine Art Gobo oder Diapositiv leitet und dieses durch eine Projektionsoptik auf ein Objekt projiziert. Das Diapositiv ist ein genaues Abbild der zu beleuchtenden Fläche des Objektes; es kann beispielsweise eine Gebäudefassade aus dem Blickwinkel des Standortes der Beleuchtungsvorrichtung sein. Flächen oberhalb und seitlich der Fassade sind durch undurchlässige (schwarze) Partien des Diapositives abgedeckt. Ausgewählte Flächen wie beispielsweise Fenster oder Türen können ganz abgedeckt oder partiell lichtdurchlässig sein, was eine unterschiedliche Beleuchtungsintensität verschiedener Gebäudestrukturen ermöglicht. Voraussetzung für eine solche selektive Beleuchtung ist die präzise Projektion des Diapositives auf das zu beleuchtende Objekt. Es besteht jedoch das Problem, dass eine Ausrichtung der Projektionsoptik von Beleuchtungsvorrichtungen nur des Nachts eingestellt werden kann, was im Allgemeinen unerwünscht und teuer ist.

In der EP 2 112 552 werden Ansätze aufgezeigt, die erlauben, dass eine einmal vorgenommene Justierung auch beim Einsetzen von neuen Diapositiven erhalten bleibt.
Relevant sind auch FR 2755211 und US 4217047.

Es ist eine Aufgabe der vorliegenden Erfindung, ein Verfahren zur Verfügung zu stellen, welches ermöglicht, dass auch die erstmalige Installation einer Beleuchtungsvorrichtung und/oder das Erfassen der Objektgeometrie tagsüber vorgenommen werden kann. Vorzugsweise sollte das Verfahren die Installation durch wenig geschultes Personal ermöglichen, so dass nicht für jede Beleuchtungsvorrichtung die Beleuchtungsspezialistin oder der Beleuchtungsspezialist selbst vor Ort die Installation vornehmen muss.

Diese Aufgabe wird gelöst durch das Verfahren, wie es in den Patentansprüchen definiert ist.

Gemäss einem Aspek der Erfindung wird zunächst die Beleuchtungsvorrichtung mit Projektionsoptik so positioniert und justiert, dass die Projektionsoptik den zu beleuchtenden Bereich des Objekts (dieser kann das ganze Objekt sein oder nur ein Teil davon) auf die Ebene abbildet, in welcher das Diapositiv vorgesehen ist (und umgekehrt).

Anschliessend wird das Objekt durch die Projektionsoptik hindurch fotografiert. Auf Basis des dadurch entstandenen Bildes (Fotografie) wird das Diapositiv gefertigt und in die Beleuchtungsvorrichtung eingesetzt, wobei die während dem Fotografieren gewählte Position und Orientierung für die Beleuchtung durch das Diapositiv übernommen werden.

Der Schritt der Positionierung und Justierung kann vorsehen, dass zunächst die Beleuchtungsvorrichtung so positioniert wird, dass der ganze zu beleuchtende Bereich des zu beleuchtenden Objekt mindestens ungefähr im Projektionsbereich der Beleuchtungsvorrichtung liegt. Als Projektionsbereich der Beleuchtungsvorrichtung wird hier der Bereich bezeichnet, in den hinein ein von der Projektionsoptik erzeugtes Bild des Diapositives (mit der nötigen Bildschärfe) projiziert werden kann. Anschliessend werden die Justierparameter (dazu gehören insbesondere die Abstrahlrichtung, also bspw. die Orientierung der Beleuchtungsvorrichtung, und unter Umständen auch die Brennweite und/oder die Position) so lange angepasst, bis der zu beleuchtende Bereich ganz und scharf auf die Diapositiv-Ebene abgebildet wird; dies kann mittels der Kamera geprüft werden, die auch zum Fotografieren verwendet wird.

Gemäss diesem Vorgehen werden also Position und Orientierung der Beleuchtungsvorrichtung und gegebenenfalls vorzugsweise auch andere die den Strahlengang durch die Projektionsoptik bestimmenden Parameter der Beleuchtungsvorrichtung zwischen dem Fotografieren des Objekts und dem Beleuchten nicht verändert. Dadurch muss ein Installateur nur tagsüber fotografieren - im Allgemeinen natürlich mittels einer Digitalkamera, auch wenn andere Kameras ebenfalls verwendet werden können - und die Fotografie derjenigen Stelle zur Verfügung stellen, welche aus der Fotografie das Diapositiv fertigt. Der Installateur kann das tagsüber machen und muss kein Spezialist für Beleuchtungsvorrichtungen der hier beschriebenen Art sein. Das Diapositiv kann in der vorstehend beschriebenen Art vom Spezialisten anhand der auf der Fotografie vorhandenen Bilddaten vollständig gefertigt und ausgeliefert werden, und der Installateur vor Ort muss es bloss - bspw. anhand von Positionsmarkierungen - korrekt in den dafür vorgesehenen Halter einfügen und diesen in die Beleuchtungsvorrichtung einschieben. Auch das kann tagsüber geschehen. Um die Beleuchtung zu starten muss im besten Fall bloss das Licht eingeschaltet werden - ohne jede weitere Justierung. Die Beleuchtungsvorrichtung kann also auch durch die blosse Betätigung eines Schalters, durch eine Zeitschaltuhr oder über eine Fernsteuerung in Betrieb genommen werden.

Als Halter für die Mattscheibe während des Fotografierens und für das Diapositiv während der Beleuchtung wird beispielsweise ein Halter gemäss der genannten EP 2 112 552 - bspw. anhand von Figur 2 beschrieben - verwendet; auf diese Patentanmeldung wird betreffend Halterung ausdrücklich Bezug genommen.

Das Fotografieren des Objektes wird mittels einer Mattscheibe vorgenommen. Die Mattscheibe wird zu diesem Zweck dort eingesetzt, wo während der Projektion das Diapositiv angeordnet ist. Die Kamera zum Fotografieren des Bildes auf der Mattscheibe wird vorzugsweise dort angeordnet, wo sich während der Projektion die Lichtquelle befindet - von dieser Position aus ist selbstverständlich die Mattscheibe sehr gut sichtbar, und geeignete Projektoren werden in der Regel immer eine an sich für die Lichtquelle vorgesehene Fixierungseinrichtung aufweisen, die auch eine genaue, reproduzierbare Positionierung der Kamera ermöglicht.

Diese hat den Vorteil, dass eine handelsübliche Kamera, vorzugsweise Digitalkamera, zum Fotografieren verwendet werden kann, ohne dass die Beleuchtungsvorrichtung selbst irgendwelche Mittel für deren Verdunkelung oder irgendwelche Blenden aufweisen müsste. Trotz der Verwendung einer handelsüblichen Kamera sind jedoch Informationen über alle Eigenschaften der Projektionsoptik und die Position und die Einstellungen der Beleuchtungsvorrichtung implizit in der erhaltenen Fotografie vorhanden, und eine Justierung der Beleuchtungsvorrichtung mit eingesetzter Lichtquelle - welche notwendigerweise des Nachts vorgenommen werden müsste - ist nicht mehr nötig.

Für die Verarbeitung der Fotografie zum Diapositiv können folgende Verarbeitungsschritte je für sich oder in Kombination vorgesehen sein:
- Vorsehen von Positionierungsmarkierungen auf der Mattscheibe , die mit fotografiert und beim Einsetzen des Diapositives in einen Halter an Positionierungsmarkierungen am Halter angepasst werden.
- Korrektur von möglichen Abbildungsfehlern der ggf. die Mattscheibe fotografierenden Kamera, beispielsweise mittels einer geeigneten Bildverarbeitungssoftware. Solche Abbildungsfehler der Kamera können einmal - bspw. anhand von Beispielaufnahmen von Rastern oder dergleichen - vermessen und in der Bildverarbeitungssoftware abgespeichert werden. Die einzige zur Vornahme der Korrektur notwendige Information ist dann eine Angabe darüber, welche Kamera verwendet wurde. Alternativ oder ergänzend dazu kann auch ein Raster auf der Mattscheibe vorgesehen sein, welches durch die Optik der fotografierenden Kamera leicht verzerrt werden kann. Wenn die Eigenschaften der Kameraoptik nicht bekannt sind, lässt sich die Korrektur auch mit an sich bekannten Bildverarbeitungsmethoden (Verzerrung, 'Morphing') für beliebige Kameraoptiken vornehmen. Das ggf. auf der Mattscheibe vorhandene Raster kann durch die Bildverarbeitungssoftware aus dem Bild entfernt werden.

Gemäss Ausführungsformen der Erfindung wird gemäss dem vorstehend anhand der dem Beispiel einer Beleuchtungsvorrichtung mit Projektionsoptik und Diapositiv beschriebenen Verfahren eine Beleuchtungsvorrichtung mit Hilfe einer Digitalkamera eingerichtet, indem zunächst die Digitalkamera relativ zur Beleuchtungsvorrichtung in einer festen Position fixiert wird.

Anschliessend wird das zu beleuchtende Objekt über ein Display betrachtet; das Display kann ein kameraeigenes Display oder ein externes, mit der Kamera in Kommunikationsverbindung stehendes Display sein. Anhand der Abbildung des Objekts auf dem Display wird dann die Beleuchtungsvorrichtung auf das Objekt ausgerichtet. Beispielsweise kann die Orientierung der Beleuchtungsvorrichtung so lange geändert werden, bis das Objekt ganz auf dem Display sichtbar ist, oder bis ein zentraler Teil des Objekts sichtbar ist, oder umgekehrt bis das Objekt sich auf einen bevorzugten, bspw. zentralen Ort des Displays abgebildet wird.

Die Fokussierung auf die gewünschte Distanz (d.h. die Brennweite der Optik der Beleuchtungsvorrichtung) kann dabei bereits werkseitig vor der Auslieferung der Beleuchtungsvorrichtung voreingestellt sein, da die Position der Beleuchtungsvorrichtung im Allgemeinen im Voraus festgelegt und bekannt ist. Sie kann aber auch während des beschriebenen Einrichtungsprozesses vorgenommen werden, wozu optional Metadaten der Kamera verwendbar sind.

Bei diesem Ansatz wird für das Einrichten einer Beleuchtungsvorrichtung mittels einer Kamera Licht erfasst, das vom zu beleuchtenden Objekt herkommt, und zwar im Allgemeinen bei ausgeschalteter Beleuchtungsvorrichtung. Es wird also die an sich grundlegende Eigenschaft der Umkehrbarkeit der Lichtausbreitung genutzt. Durch diesen scheinbar banalen Ansatz wird es nun möglich, Beleuchtungseinrichtungen bei Tageslicht einzurichten und in gewünschter Genauigkeit auf das zu beleuchtende Objekt auszurichten. Nächtliche Testläufe sind nicht mehr nötig oder zumindest nicht mehr so aufwändig wie bei Ansätzen gemäss dem Stand der Technik.

Das Fixieren der Digitalkamera relativ zur Beleuchtungsvorrichtugn kann gemäss einer ersten Option auf die vorstehend beschriebene Art geschehen, indem die Kamera ein Bild durch eine Projektionsoptik hindurch aufnimmt, durch Erfassen einer Mattscheibe .

Gemäss einer zweiten Option kann ein Spiegel oder eine andere Lichtumlenkeinrichtung vor einem Lichtsaustrittspunkt der Beleuchtungsvorrichtung oder an einem anderen geeigneten Punkt im Strahlengang vom Objekt zur Lichtquelle platziert werden, beispielsweise vor ein Objektiv, wenn die Beleuchtungsvorrichtung als Projektionsvorrichtung ausgebildet ist, und die Kamera kann vom zu beleuchtenden Objekt herkommendes, durch diesen Spiegel umgelenktes Licht erfassen.

Weiterhin besteht eine Option darin, auch Metadaten der Kamera - insbesondere durch eine Autofokusfunktion gewonnene Daten über die Distanz zum Objekt und eventuell weitere Metadaten wie Brennweite etc. - zur Justierung der Beleuchtungsvorrichtung zu verwenden. Dies kann einerseits in der erwähnten Art geschehen, indem die Metadaten in die Darstellung auf dem Display und/oder die Fertigung des Diapositivs (falls vorhanden) einfliessen. Andererseits können die Metadaten auch verwendet werden, um Parameter der Beleuchtungsvorrichtung direkt einzustellen, insbesondere eine Brennweite derselben.

Nachfolgend werden Ausführungsformen der Erfindung anhand von Zeichnungen genauer beschrieben. In den Figuren bezeichnen gleiche Bezugszeichen gleiche oder analoge Elemente. Es zeigen:
- **Figur 1** schematisch die Funktionsweise einer Beleuchtungsvorrichtung zur präzis-selektiven Beleuchtung eines Gebäudes oder anderen Objekts;
- Figur 2 ebenfalls schematisch die Beleuchtungsvorrichtung gemäss Figur 1 während des Fotografierens;
- Figur 3 schematisch einen Verfahrensablauf einer Ausführungsform des erfindungsgemässen Verfahrens; und
- Figuren 4-6 je eine Option zur Durchführung des Verfahrens zum Einrichten einer Beleuchtungsvorrichtung.

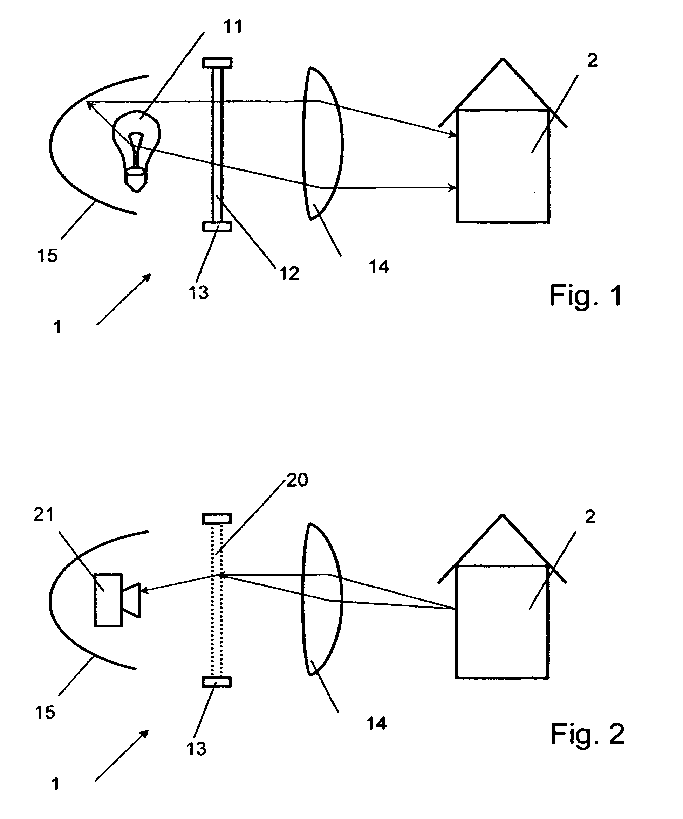

Die Beleuchtungsvorrichtung 1 gemäss Figur 1 dient dazu, ein Gebäude 2 oder ein anderes Objekt so selektiv konstant zu beleuchten, dass nur diejenigen Partien des Objekts angestrahlt werden, für die das wirklich gewünscht wird, und dass kein oder nur wenig Licht am Objekt vorbei in die Umgebung abgestrahlt wird. Zu diesem Zweck weist die Beleuchtungsvorrichtung 1 zunächst eine Lichtquelle 11 auf; diese kann als Punktlichtquelle, bspw. eine Lichtbogenlampe oder eine andere lichtstarke Lichtquelle ausgebildet sein. Von der Lichtquelle 11 erzeugtes Licht gelangt - optional durch nicht gezeichnete Elemente einer Kondensoroptik - auf ein Diapositiv 12 welches als eine Art Gobo verwendet wird. Das Diapositiv wird durch einen vorzugsweise die spielfreie, reproduzierbare Positionierung gewährenden Halter 13 gehalten. Es enthält ein Abbild des Objekts bzw. der zu beleuchtenden Bereiche des Objekts und deckt nicht zu beleuchtende Bereiche in der Art einer Maske ab. Das Abbild (in der Optik ist diesbezüglich oft von einem abzubildenden "Objekt" die Rede; dieser Begriff wird hier nicht verwendet, da das zu beleuchtende Gebäude o. dgl. hier auch als Objekt bezeichnet wird) wird durch eine Projektionsoptik 14 auf das Gebäude 2 projiziert. In der Figur wird die Projektionsoptik durch eine Linse symbolisch dargestellt; selbstverständlich kann die Projektionsoptik auch mehrere Linsen, Spiegel und andere optisch wirksame Elemente enthalten.

Ebenfalls in Figur 15 gezeichnet ist ein optionaler kollimierender, hier annähernd parabolischer Spiegel 15, welcher von der Lichtquelle nach rückseitig abgestrahltes Licht kollimiert nach vorne in Richtung zum Diapositiv umlenkt und nutzbar macht. Gemäss **Figur 2** kann zum Einrichten der Beleuchtungsvorrichtung zunächst anstelle des Diapositivs eine Mattscheibe 20 (der Begriff Matt-"scheibe" impliziert in diesem Text nicht, dass die Scheibe durch einen steifen Körper gebildet werden muss, sondern schliesst die Verwendung einer bspw. straff gespannten Folie oder dergleichen ausdrücklich mit ein) eingesetzt werden. Die Mattscheibe 20 wird beispielsweise - aber nicht notwendigerweise - in demselben Halter 13 oder einem identisch oder ähnlich ausgebildeten Halter gehalten wie das Diapositiv während des Beleuchtens. Beim Einrichten der Beleuchtungsvorrichtung wird zunächst anstelle der Lichtquelle und an deren Ort eine Kamera 21 positioniert. Durch diese wird das auf der Mattscheibe vorhandene Bild (von der Projektionsoptik auf die Mattscheibenebene abgebildet) aufgenommen. Eine ggf. vorhandene Kondensoroptik würde für diesen Schritt wie die Lichtquelle entfernt.

Die Kamera ist zum Zweck der Positionierung in der Beleuchtungsvorrichtung in einen geeigneten Adapter eingesetzt, der mit der Präzisen Halterung der Lichtquelle zusammenwirkt und ein reversibel-passgenaues Positionieren der Kamera ermöglicht.

Im Prinzip könnte die Kamera auch anderswo positioniert werden als am Ort der Lichtquelle, und es können auch eigens angebrachte Umlenkeinrichtungen oder dergleichen verwendet werden (bspw. kann die Kamera ausserhalb der eigentlichen Projektionsvorrichtung angebracht werden, und ein Umlenkspiegel kann das Licht von der Mattscheibe zur Kamera hin umlenken. Die in der Figur gezeigte Positionierung am Ort der Lichtquelle hat jedoch Vorteile: Erstens ist konstruktionsgemäss die Sicht von der Lichtquelle auf den Ort des Diapositivs (bzw. eben der Mattscheibe) immer sehr gut, und es müssen keine Vorrichtungen getroffen werden, dass die ganze Mattscheibe vollständig und gleichmässig fotografierbar ist. Zweitens ist in vielen üblichen geeigneten Projektoren die Lichtquelle durch eine Halterung gehalten, die eine reversible und genaue Positionierung erlaubt, und die Kamera kann durch einen entsprechenden Adapter durch eben die Halterung der Lichtquelle gehalten werden; ein solcher Adapter kann in mehreren Projektoren verwendet werden.

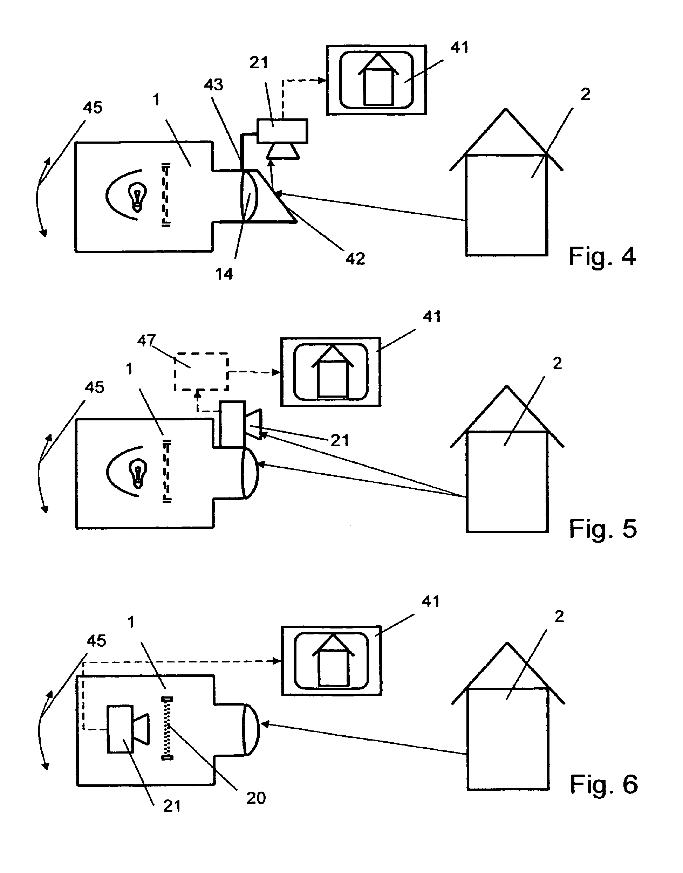

Die Justierung der Beleuchtungsvorrichtung wird beispielsweise wie folgt vorgenommen. Die Fokussierung auf die gewünschte Distanz (d.h. die Brennweite der Projektionsoptik) kann bereits werkseitig vor der Auslieferung der Beleuchtungsvorrichtung voreingestellt sein, da die Position der Beleuchtungsvorrichtung im Allgemeinen im Voraus festgelegt und bekannt ist. Die genaue Ausrichtung auf das Objekt (die Orientierung) wird bspw. anhand des von der Kamera aufgenommenen Bildes vorgenommen, d.h. die Orientierung der Beleuchtungsvorrichtung wird so lange angepasst, bis das Bild des Objekts optimal auf der Mattscheibe plaziert ist. Dabei wird mit Vorteil der Monitor der Digitalkamera oder gar ein externer, direkt oder über eine dazwischen angeordnete Datenverarbeitungseinrichtung angeschlossener Monitor verwendet. Anhand des Bildes auf der Mattscheibe kann auch die Fokussierung wenn nötig nachjustiert werden, bis das Bild scharf ist. Die Justierung gemäss diesem Prinzip wird nachstehend noch anhand Figur 6 vergleichend zu anderen Ausführungsformen dargestellt.

Alternativ kann die Justierung auch anhand werkseitig vorgegebener Angaben und/oder nur anhand einer Schätzung vorgenommen werden. Insbesondere die genaue Orientierung (entsprechend der Richtung, in welche Projiziert wird) ist nicht immer sehr kritisch; es muss einzig gewährleistet sein, dass das zu beleuchtende Objekt als Ganzes auf die Mattscheibe abgebildet wird.

Anschliessend an die Justierung werden die Orientierung und ggf. die Fokussierparameter der Beleuchtungsvorrichtung nicht mehr geändert. Die Beleuchtungsvorrichtung kann so eingerichtet sein, dass eine Justierung ohnehin nur mit Werkzeugen machbar ist (z.B. durch Betätigung von Stellschrauben oder dergleichen), oder es können geeignete nur mit Werkzeug lösbare Fixierungsmittel vorhanden sein (Fixierschrauben). Ergänzend oder Alternativ kann auch das Personal instruiert werden, dass anschliessend an die Justierung im Rahmen des Fotografiervorgangs die Justierparameter nicht mehr verändert werden dürfen.

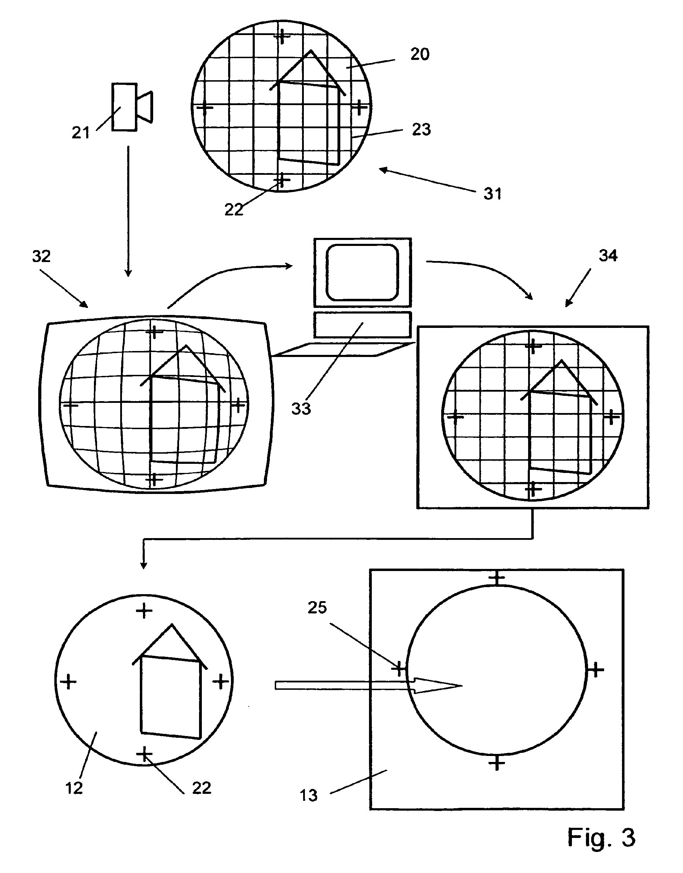

**Figur 3** illustriert anhand eines Beispiels die weiteren Schritte des Vorgehens. Zunächst wird wie erwähnt in der in Figur 2 illustrierten Konfiguration die Mattscheibe 20 fotografiert (Bezugszeichen 31). Die Mattscheibe selbst weist vorzugsweise Positionierungsmarkierungen 22 und/oder eventuell ein Raster 23 von dünnen Linien auf.

Die erhaltene Fotografie 32 kann wie illustriert Abbildungsfehler der Kamera 31 enthalten. Mit Hilfe des Computers 33 werden diese korrigiert (Bezugszeichen 34). An der korrigierten Fotografie kann gegebenenfalls der Computer auch das Raster entfernen. Anschliessend wird auf Basis der korrigierten Fotografie das Diapositiv 12 gefertigt, wobei die Positionierungsmarkierungen ggf. auf dem Diapositiv erscheinen. Die Positionierungsmarkierungen erlauben ein die Orientierung wahrendes Einsetzen in den Halter 13, der zu diesem Zweck entsprechende Halter-Positionierungsmarkierungen 25 aufweist.

Die Positionierungsmarkierungen 22 können bspw. ausserhalb des Bereiches liegen, der durch die Projektionsoptik abgebildet wird, d.h. sie können bspw. im eingesetzten Zustand durch den inneren Rand des Halters 13 überdeckt werden. Alternativ können sie auch nach dem Einsetzen entfernt werden (bspw. durch Schwärzung wenn sie als helle Markierungen auf einem abgedunkelten Bereich vorhanden sind), oder sie könnten so ausgebildet sein, dass sie bei der Beleuchtung nicht nennenswert störend wirken.

Nach Einsetzen des Diapositivs in den Halter wird dieser in die Beleuchtungsvorrichtung 1 eingeschoben, in die in Figur 1 skizzierte Konfiguration, wobei deren Justierung und Positionierung vom Schritt 31 des Fotografierens übernommen werden. Zu diesem Zweck kann die Beleuchtungsvorrichtung wie erwähnt so eingerichtet sein, dass sie nicht werkzeug- und gewaltfrei umpositioniert, umorientiert und/oder umjustiert werden kann.

Bei alternativen Ausführungsformen (nicht gemäß der beanspruchten Erfindung) kann anstelle der Mattscheibe und einer Fotokamera eine lichtempfindliche Platte verwendet werden. Der Schritt der Abbildungsfehler-Korrektur entfällt dann.

Anhand von **Figuren 4 bis 6** werden noch verschiedene Verfahren zum Einrichten von Beleuchtungsvorrichtungen miteinander verglichen.

In der Ausführungsform gemäss **Figur 4** (nicht gemäß der beanspruchten Erfindung) wird vom Objekt 2 in Richtung zur Beleuchtungsvorrichtung 1 abgestrahltes Licht durch eine Umlenkeinrichtung, insbesondere einen Spiegel 42 abgelenkt, bevor es zur Projektionsoptik 14 gelangen kann; auch ein Ablenken von Licht im Innern der Projektionsoptik wäre als Alternative denkbar. Das umgelenkte Licht wird durch die Kamera erfasst, d.h. die Kamera erfasst ein Bild des Objekts via die Umlenkeinrichtung. Das von der Kamera erfasste Bild wird auf einem Display 41 dargestellt. Das Display kann Teil der Kamera oder ein externes Display 41 sein, indem das von der Kamera erfasste Bild über eine geeingete Schnittstelle abgegriffen und am externen Display-gegebenenfalls über einen Computer - dargestellt wird. Mittels geeigneter Justiermittel 45 wird dann die Beleuchtungsvorrichtung so auf das Objekt 2 ausgerichtet dass sich dieses direkt im Strahlengang von vom der Beleuchtungseinrichtung ausgehendem Licht befindet (und umgekehrt) - das Bild des Objekts wird bspw. am Display zentriert und wenn nötig scharf gestellt.

Die Kamera und die Umlenkeinrichtung sind für den Justierprozess fest mit der Beleuchtungsvorrichtung verbunden, so dass sie jede (Schwenk-)bewegung von deren Optik mitmachen. Die Umlenkeinrichtung und die Kamera sind so positioniert, dass die Kamera mindestens einen zentralen Teil des Bildes erfasst, das von denjenigen Bereichen des Objekts stammt, von denen ausgehendes Licht durch die Optik der Beleuchtungsvorrichtung ohne die Umlenkeinrichtung auf die Lichtquelle geworfen würde. Sofern bei der Optik der Beleuchtungsvorrichtung (Projektionsoptik bzw. Kollimationsoptik wenn die Beleuchtungseinrichtung keine Projektionsoptik aufweist sondern bloss einen Scheinwerfer) eine optische Achse definiert ist, sind die Umlenkeinrichtung und die Kamera bspw. so positioniert, dass ein Strahl, welcher ohne Umlenkeinrichtugn der optischen Achse folgen würde, mindestens näherungsweise auf die optische Achse der Kamera umgelenkt wird.

Für die Fixierung der Umlenkeinrichtung und der Kamera relativ zur Beleuchtungsvorrichtung kann bspw. eine in der Figur nur sehr schematisch dargestellte Fixiereinrichtung 43 vorhanden sein, die sowohl die Umlenkeinrichtung (den Spiegel 42) als auch die Kamera 21 relativ zur Beleuchtungsvorrichtung fixiert. Die Fixiereinrichtung 43 kann bspw. wie in Figur 4 angedeutet auf einen Bereich der Projektionsvorrichtung aufstülpbar oder an diesem anschraubbar oder anderswie befestigbar sein.

In der Ausführungsform gemäss **Figur 5** (nicht gemäß der beanspruchten Erfindung) ist die Kamera ebenfalls an der Beleuchtungsvorrichtung 1 (insbesondere an deren Gehäuse) gefestigt. Im Unterschied zu Figur 4 wird das Licht nicht vom Strahlengang Objekt-Lichtquelle weg abgelenkt, sondern die Kamera erfasst das Objekt von einem positionsbedingt leicht verschobenen Blickwinkel her. Der resultierende Parallaxenfehler kann sehr klein und für die Einstellung praktisch irrelevant sein, wenn das Objekt relativ weit von der Beleuchtungsvorrichtung entfernt ist. Wenn er nicht irrelevant ist, wird er bspw. vom erfahrenen Benutzer durch Abschätzen ausgeglichen. Es kann aber auch vorgesehen sein, dass er durch eine optionale Software 47 korrigiert wird, welche optional auch die Metadaten von der Kamera, insbesondere die Entfernung zum Objekt 2 als Eingangsdaten verarbeitet.

Alternativ zur Anordnung gemäss Figur 5 kann je nach Konfiguration die Kamera auch unmittelbar der Optik der Beleuchtungsvorrichtung vorgesetzt sein oder sogar in die Beleuchtungsvorrichtung - auf dem Strahlengang eingesetzt sein. In Fällen, in denen dann das kameraeigene Display nicht mehr zugänglich ist, kann wie auch in allen anderen Fällen ein externes Display verwendet werden.

In den Figuren 4 und 5 kann das aufgenommene Bild der Kamera weiterverarbeitet werden, um gegebenenfalls, wenn die Beleuchtungsvorrichtung im erwähnten Sinn als Projektionsvorrichtung dient, das Diapositiv zu erzeugen. Eine entsprechende Bildverarbeitungssoftware ist bspw. mit Daten über die Abbildungsfehler der Projektionsoptik versehen, oder solche Daten können eingelesen werden. Insoweit das nötig ist und nicht schon durch eine Software 47 geschehen ist, kann die Bildverarbeitungssoftware auch einen eventuellen Parallaxenfehler korrigieren.

Während in den Figuren 4 und 5 die Ausgestaltung als Projektionsvorrichtung optional ist (was in den Figuren durch das gestrichelt dargestellte Diapositiv illustriert ist), ist die Ausführungsform gemäss **Figur 6** insbesondere für Projektionsvorrichtungen geeignet. Die Kamera ist wie anhand Figur 2 bereits beschrieben so positioniert, dass sie das auf die Mattscheibe 20 abgebildete Bild erfassen kann. Die genaue Ausrichtung auf das Objekt (die Orientierung) wird anhand des von der Kamera aufgenommenen, auf dem Display 41 angezeigten Bildes vorgenommen, d.h. die Orientierung der Beleuchtungsvorrichtung wird so lange angepasst, bis das Bild des Objekts optimal auf der Mattscheibe platziert ist. In der Ausführungsform gemäss Figur 6 ist auch eine Einstellung oder Nachjustage der Fokussierung möglich, da bei der passenden Fokussierung das Objekt scharf auf die Mattscheibe 20 abgebildet wird.

## Patentansprüche

1. Verfahren zum Einrichten einer Beleuchtungsvorrichtung (1) zum Beleuchten eines Objekts (2), wobei die Beleuchtungsvorrichtung eine Projektionsoptik (14) zum Abbilden eines Diapositives (12) auf eine Ebene des zu beleuchtenden Objekts beinhaltet, mit den Schritten:
- Positionieren und Justieren der Beleuchtungsvorrichtung, so, dass die Projektionsoptik den zu beleuchtenden Bereich des Objekts auf eine Diapositiv-Ebene abbildet;
- Einsetzen einer Mattscheibe (20) in die Beleuchtungsvorrichtung (1), so, dass diese in der Diapositiv-Ebene liegt,
- Erstellen einer Fotografie des zu beleuchtenden Bereichs durch die Projektionsoptik hindurch, indem mittels einer Kamera (21) eine Fotografie der Mattscheibe (20) erstellt wird;
- Fertigen des Diapositivs auf Basis der Fotografie; und
- Einsetzen des Diapositivs in die Beleuchtungsvorrichtung, so, dass es auf der Diapositiv-Ebene liegt, wobei die während dem Fotografieren gewählte Position und Justierparameter übernommen werden.

2. Verfahren nach Anspruch 1, **dadurch gekennzeichnet, dass** der Schritt des Positionierens und Justierens die folgenden Teilschritte umfasst:
- Positionieren der Beleuchtungsvorrichtung (1) so, dass der ganze zu beleuchtende Bereich des zu beleuchtenden Objekt (2) mindestens ungefähr im Projektionsbereich der Beleuchtungsvorrichtung liegt; und
- Anpassen der Justierparameter unter Verwendung der Kamera (21) und der Mattscheibe, so lange, bis der zu beleuchtende Bereich ganz und scharf auf die Diapositiv-Ebene abgebildet wird.

3. Verfahren nach Anspruch 1 oder 2, **dadurch gekennzeichnet, dass** die Kamera während des Fotografierens dort angeordnet wird, wo eine Lichtquelle (11) der Beleuchtungsvorrichtung vorgesehen ist.

4. Verfahren nach Anspruch 3, **dadurch gekennzeichnet, dass** während des Fotografierens die Kamera (21) durch eine Halterung der Lichtquelle gehalten wird.

5. Verfahren nach einen der vorangehenden Ansprüche, **dadurch gekennzeichnet, dass** die Fotografie nachbearbeitet wird, indem Abbildungsfehler der Kamera (21) korrigiert werden.

6. Verfahren nach Anspruch 5, **dadurch gekennzeichnet, dass** die Mattscheibe ein Raster (23) aufweist, das beim Nachbearbeiten das Überprüfen der vorgenommenen Korrektur ermöglicht.

7. Verfahren nach einem der vorangehenden Ansprüche, **dadurch gekennzeichnet, dass** die Mattscheibe Positionsmarkierungen (22) aufweist, die beim Fertigen des Diapositivs auf das Diapositiv abgebildet werden und die Positionierung relativ zu einem Halter (13) ermöglichen.

8. Verfahren einem der vorangehenden Ansprüche, **dadurch gekennzeichnet, dass** als Halter (13) der Mattscheibe (20) während des Fotografierens der Halter für das Diapositiv (12) verwendet wird.

9. Verfahren nach einem der vorangehenden Ansprüche, **dadurch gekennzeichnet, dass** nach dem Schritt des Positionierens und Justierens und vor dem Fertigen des Diapositivs die Justierparameter so fixiert werden, dass sie nicht mehr werkzeug- und gewaltfrei geändert werden können.

10. Verfahren nach einem der vorangehenden Patentansprüche, wobei als die Kamera eine Digitalkamera verwendet wird und wobei eine Ausrichtung der Orientierung der Beleuchtungsvorrichtung auf das Objekt anhand einer Darstellung des Objekts auf einem Display der Digitalkamera vorgenommen worden wird.

11. Verfahren nach Anspruch 9, **dadurch gekennzeichnet, dass** auch Metadaten der Digitalkamera (21), insbesondere zur Distanz zwischen Digitalkamera und Objekt (2), zum Justieren der Beleuchtungsvorrichtung verwendet werden.

## Claims

1. A method for setting up an illumination device (1) for illuminating an object (2), wherein the illumination device contains projection optics (14) for imaging a slide (12) onto a plane of the object to be illuminated, with the steps:
positioning and adjusting the illumination device such that the projection optics image the region of the object which is to be illuminated, onto a slide plane;
- inserting a matt screen (20) into the illumination device (1) such that this lies in the slide plane,
- creating a photograph of the region to be illuminated, through the projection optics, by way of a photograph of the matt screen (20) being created by way of a camera (21);
- creating the slide on the basis of the photograph; and
- inserting the slide into the illumination device such that it lies on the slide plane, wherein the position and adjustment parameters selected during the photographing are adopted.

2. A method according to claim 1, **characterised in that** the step of positioning and adjusting comprises the following part steps:
- positioning the illumination device (1) such that the complete region of the object to be illuminated (2) and which is to be illuminated, lies at least roughly in the projection region of the illumination device; and
- adapting the adjustment parameters amid the use of the camera (2) and the matt screen, until the region to be illuminated is imaged completely and in a focussed manner onto the slide plane.

3. A method according to claim 1 or 2, **characterised in that** the camera during the photographing is arranged where a light source (11) of the illumination device is provided.

4. A method according to claim 3, **characterised in that** the camera (21) is held by a holder of the light source during the photographing.

5. A method according to one of the preceding claims, **characterised in that** the photograph is post-processed by way of imaging errors of the camera (21) being corrected.

6. A method according to claim 5, **characterised in that** the matt screen is a grid (23) which on post-processing permits the checking of the implemented correction.

7. A method according to one of the preceding claims, **characterised in that** the matt screen comprises position markings (22) which on creation of the slide are imaged onto the slide and permit the positioning relative to a holder (13).

8. A method according to one of the preceding claims, **characterised in that** the holder for the slide (12) is used as a holder (13) of the matt screen (20) during the photographing.

9. A method according to one of the preceding claims, **characterised in that** the adjusting parameters are fixed after the step of positioning and adjusting and before the creation of the dispositive, such that they may no longer be changed without a tool or without force.

10. A method according to one of the preceding claims, wherein a digital camera is used as a camera and wherein an alignment of the orientation of the illumination device onto the object is carried out by way of a representation of the object on a display of the digital camera.

11. A method according to claim 9, **characterised in that** metadata of the digital camera (21) in particular on the distance between the digital camera and the objet (2), are used for adjusting the illumination device.

## Revendications

1. Procédé d'installation d'un dispositif d'éclairage (1) destiné à éclairer un objet (2), le dispositif d'éclairage contenant une optique de projection (14) qui forme l'image d'une diapositive (12) sur un plan de l'objet à éclairer, le procédé présentant les étapes qui consistent à :
- placer et ajuster le dispositif d'éclairage de telle sorte que l'optique de projection forme l'image de la partie à éclairer de l'objet sur un plan de diapositive,
- insérer une plaque mate (20) dans le dispositif d'éclairage (1) de telle sorte qu'elle soit située sur le plan de diapositive,
- former une photographie de la partie à éclairer à travers l'optique de projection en formant à l'aide d'une caméra une photographie de la plaque mate (20),
- réaliser la diapositive sur la base de la photographie et
- insérer la diapositive dans le dispositif d'éclairage de telle sorte qu'elle soit située sur le plan de diapositive en enregistrant la position sélectionnée pendant la photographie et les paramètres d'ajustement.

2. Procédé selon la revendication 1, **caractérisé en ce que** l'étape de placement de d'ajustement comporte les étapes partielles suivantes :
- placer le dispositif d'éclairage (1) de telle sorte la totalité de la partie à éclairer de l'objet à éclairer soit située au moins approximativement dans la partie de projection du dispositif d'éclairage et
- adapter les paramètres d'ajustement à l'aide de la caméra (21) et de la plaque mate jusqu'à ce que l'image de la totalité de la partie à éclater soit formée nettement sur le plan de diapositive.

3. Procédé selon les revendications 1 ou 2, **caractérisé en ce que** pendant la photographie, la caméra est disposée là où une source de lumière (11) du dispositif d'éclairage est prévue.

4. Procédé selon la revendication 3, **caractérisé en ce que** la source de lumière est maintenue par un support pendant la photographie par la caméra (21).

5. Procédé selon l'une des revendications précédentes, **caractérisé en ce que** la photographie est retravaillée pour corriger les défauts de formation d'image de la caméra (21).

6. Procédé selon la revendication 5, **caractérisé en ce que** la plaque mate présente une trame (23) qui permet de vérifier la correction réalisée lorsque la photographie est retravaillée.

7. Procédé selon l'une des revendications précédentes, **caractérisé en ce que** la plaque mate présente des repères de positionnement (22) dont l'image est formée sur la diapositive lors de la formation de la diapositive et qui permettent de la positionner par rapport à un support (13).

8. Procédé selon l'une des revendications précédentes, **caractérisé en ce que** le support prévu pour la diapositive (12) est utilise comme support de la plaque mate (20) pendant la photographie.

9. Procédé selon l'une des revendications précédentes, **caractérisé en ce qu'**après l'étape de placement et d'ajustement et avant la formation de la diapositive, les paramètres d'ajustement sont fixés de manière à ne plus pouvoir être modifiés sans outil ou sans recours à la force.

10. Procédé selon l'une des revendications précédentes, dans lequel une caméra numérique est utilisée comme caméra et dans lequel un alignement et une orientation du dispositif d'éclairage par rapport à l'objet sont réalisés en recourant à une représentation de l'objet sur un affichage de la caméra numérique.

11. Procédé selon la revendication 9, **caractérisé en ce que** des métadonnées de la caméra numérique (21) et en particulier de la distance entre la caméra numérique et l'objet (2) sont utilisées pour ajuster le dispositif d'éclairage.
